# EUROPÄISCHE PATENTSCHRIFT

(11) **EP 2 724 899 B1**
(45) Veröffentlichungstag und Bekanntmachung des Hinweises auf die Patenterteilung: **18.11.2015**
(21) Anmeldenummer: 13183864.1
(22) Anmeldetag: 11.09.2013
(51) Int. Cl.: B60R 21/06, B60R 22/18

(54) **Sicherheitsgurtvorrichtung für eine Rücksitzanordnung eines Fahrzeuges**
Seat belt device for a rear seat assembly of a vehicle
Dispositif de ceinture de sécurité pour un agencement de siège arrière d'un véhicule

(30) Priorität: 27.10.2012 DE 102012021217
(43) Veröffentlichungstag der Anmeldung: 30.04.2014
(73) Patentinhaber: Volkswagen Aktiengesellschaft, 38440 Wolfsburg (DE)
(72) Erfinder: Effenberger, Witali, 38176 Wendeburg (DE)

(56) Entgegenhaltungen:
- EP-A1- 2 078 646
- DE-U1- 29 815 389

## Beschreibung

Die Erfindung betrifft ein Fahrzeug mit einer Sicherheitsvorrichtung für eine Rücksitzanordnung des Fahrzeuges nach dem Oberbegriff des Patentanspruches 1.

Bei Kombifahrzeugen weist die Rücksitzanordnung Rückenlehnenteile auf, die zur Vergrößerung des Laderaums zumindest teilweise nach vorne umklappbar sind. Die in der Fahrzeugquerrichtung seitlich außen befindlichen Sicherheitsgurte der Rücksitzanordnung können über ein am Fahrzeugrohbau montiertes Gurtführungsteil umgelenkt und bis zu einem Gurtretraktor geführt werden, der im Bereich des Laderaums ebenfalls am Fahrzeugrohbau montiert ist. Bei solchen Kombifahrzeugen kann zudem eine Netztrennwand vorgesehen sein, mit der der Laderaum vom Fahrgastraum abtrennbar ist. Die Netztrennwand dient als Rückhaltevorrichtung für im Laderaum mitgeführtes Ladegut bei starken Fahrzeugverzögerungen. Die Netztrennwand kann in einer im oberen Bereich hinter der Rücksitzanordnung befindlichen Kassette aufgewickelt werden, deren Stirnseiten an Halteelementen einhängbar sind, die ebenfalls am Fahrzeugrohbau montiert sind. Die Netztrennwand weist außerdem an ihrem freien Ende eine Haltestange auf, die an gegenüberliegenden Aufnahmen an den beiden Dachlängsträgern des Fahrzeugs eingehängt werden kann.

Sowohl das oben erwähnte Gurtführungsteil als auch der Netztrennwand-Halter sind jeweils über ein eigenes Verstärkungsprofil am Fahrzeugrohbau angebunden. Die beiden Verstärkungsprofile sind dabei so bemessen, dass bei extremen Belastungen, etwa einem Frontalaufprall, die Schutzfunktion der Netztrennwand und die Rückhaltefunktion des Sicherheitsgurtes zuverlässig erfüllt werden.

Die Montage dieser Verstärkungsprofile ist mit hohem Fertigungsaufwand sowie hohem Bauteilaufwand verbunden, wodurch sowohl die Fertigungszeit als auch das Baugewicht des Fahrzeuges entsprechend erhöht ist.

Aus der EP 1 449 747 A2 ist eine gattungsgemäße Sicherheitsgurtvorrichtung für eine Rücksitzanordnung eines Fahrzeuges bekannt. Die Sicherheitsgurtvorrichtung weist einen im Bereich des Laderaums hinter der Rücksitzanordnung vorgesehenen Gurtretraktor auf, der mittels eines Verstärkungsprofiles am Fahrzeugrohbau montiert ist.

Aus der EP 2 078 646 A1 ist eine Anordnung bekannt, bei der ein Gurt-Endbeschlag seitlich an einer fondseitigen hinteren Sitzreihe über eine Anbindungsstelle drehbar am Fahrzeugrohbau befestigt ist. Am Gurt-Endbeschlag ist ein Ende des Sicherheitsgurtes befestigt. Der Sicherheitsgurt wird von dem bodenseitig angeordneten Gurt-Endbeschlag in Vertikalrichtung nach oben zu einem Gurt-Umlenkbeschlag geführt und von dort gegenläufig in Richtung auf einen Gurt-Aufroller nach unten umgelenkt. Zudem weist die Anordnung eine Netztrennwand-Kassette auf. Diese ist, in der Fahrzeuglängsrichtung betrachtet, in etwa auf gleicher Höhe wie der Gurtaufroller angeordnet und um einen Vertikalversatz unterhalb des Gurt-Umlenkbeschlages angeordnet. Der Gurt-Umlenkbeschlag ist an der C-Säule montiert, während der Gurtaufroller, in der Fahrzeuglängsrichtung betrachtet, in etwa auf gleicher Höhe wie die Netztrennwand-Kassette angeordnet ist. Am Gurt-Endbeschlag ist ein Haltebügel angeschweißt, an dem ein Zurrgurt der Netztrennwand-Kassette angebunden ist. Der Zurrgurt wirkt im Crashfall als ein Sicherungselement für die Netztrennwand-Kassette.

Aus der DE 298 15 389 U1 ist eine Trennwand bekannt, die den Insassenraum in einen Frontraum und einen Rückraum unterteilt. Die Trennwand ist aus einem starren Rahmenteil aufgebaut, der mit einer flexiblen Bespannung versehen ist. An einem vertikalen Rahmenteil ist ein Gurt-Umlenkbeschlag in der Fahrzeughochrichtung nach oben und nach unten verstellbar.

Die Aufgabe der Erfindung besteht darin, Fahrzeug mit einer Sicherheitsgurtvorrichtung für die Rücksitzanordnung des Fahrzeuges bereitzustellen, mit deren Hilfe der Fertigungsaufwand sowie der Bauteilaufwand bei der Herstellung des Fahrzeuges reduzierbar ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass das Gurtführungsteil, mit dem die seitlich äußeren Sicherheitsgurte bzw. Gurtbänder der Rücksitzanordnung zum Gurtretraktor umlenkbar sind, und die Halter zum Einhängen einer Netztrennwand-Kassette im Stand der Technik voneinander separate Bauteile sind, die über separate Verstärkungsprofile am Fahrzeugrohbau angebunden sind. Entsprechend müssen sowohl die Netztrennwand-Halter als auch die Gurtführungsteile separat voneinander am Fahrzeugrohbau montiert werden. Vor diesem Hintergrund ist gemäß dem kennzeichnenden Teil des Patentanspruches 1 das Gurtführungsteil und der Netztrennwand-Halter zu einer gemeinsamen Baueinheit zusammengefasst, die über eine gemeinsame Anbindung, etwa eine Schraubverbindung, an der Seitenwand des Fahrzeugrohbaus montierbar sind. Erfindungsgemäß übernimmt daher das Gurtführungsteil in Doppelfunktion sowohl die Gurtumlenkung als auch die Halterung der Netztrennwand-Kassette. Auf diese Weise kann eine separate Rohbau-Anbindung des Netztrennwand-Halters entfallen. Durch das somit gebildete kompakte System wird im Laderaum wertvoller Bauraum oder Ladevolumen zusätzlich bereitgestellt. Zudem entfallen Verbindungsteile, die bei separater Anbindung des Netztrennwand-Halters erforderlich wären. Außerdem wird die Fertigungszeit bei der Montage der aus Netztrennwand-Halter und Gurtführungsteil bestehenden Baueinheit deutlich reduziert.

In einer besonderen Ausführungsform kann das Gurtführungsteil unter Zwischenlage des Netztrennwand-Halters auf ein gemeinsames Verstärkungsprofil der Karosserie-Seitenwand beziehungsweise der Rohbau-Seitenwand montiert werden. Dabei kann das Gurtführungsteil einen Grundkörper aufweisen, der eine Umlenköse trägt, durch den der Sicherheitsgurt bzw. das Gurtband zum Gurtretraktor umgelenkt werden kann. Zusätzlich kann der Grundkörper des Gurtführungsteils auch einen Steckkanal aufweisen, in dem der Netztrennwand-Halter einsetzbar ist. Dadurch kann der Netztrennwand-Halter formschlüssig in dem Steckkanal des Gurtführungsteil gehaltert sein.

Zur Sicherung dieser Formschlussverbindung kann ein Sicherungselement vorgesehen werden, mit dem der Netztrennwand-Halter kraftschlüssig im Grundkörper des Gurtführungsteils festlegbar ist. Das Sicherungselement kann bevorzugt ein Schraubbolzen sein, der durch zueinander fluchtend angeordnete Schraublöcher des Gurtführungsteils und des Netztrennwand-Halters geführt ist. Zusätzlich kann der zumindest eine Schraubbolzen gleichzeitig noch mit dem Verstärkungsprofil der Fahrzeugkarosserie verschraubt sein.

Von besonderer Bedeutung ist es, sowohl den Netztrennwand-Halter als auch das Gurtführungsteil stabil am gemeinsamen Verstärkungsprofil anzubinden. Vor diesem Hintergrund ist es vorteilhaft, wenn sowohl der Netztrennwand-Halter als auch das Gurtführungsteil mit Kontaktflächen unmittelbar in Anlage mit dem Verstärkungsprofil, etwa einer am Fahrzeugrohbau angeschweißten Verstärkungs-Blechplatte, in Anlage sind. Hierzu kann bevorzugt der oben erwähnte Steckkanal an der, dem Verstärkungsprofil zugewandten Seite des Gurtführungsteil rinnenförmig offen ausgebildet sein. Für eine weitgehend spielfreie Formschlussverbindung kann der Querschnitt des Steckkanals zudem mit nur geringem Bewegungsspiel größer als das Querschnittsprofil des Netztrennwand-Halters bemessen sein oder in etwa identisch mit dem Querschnittsprofil des Netztrennwand-Halters sein.

Der Netztrennwand-Halter kann ein Blechformteil sein, das eine in den Grundkörper des Gurtführungsteils einsetzbare, insbesondere streifenförmige Basisplatte aufweist, die mit einem Halterungsabschnitt, etwa einem Haltebügel, verlängert ist. In dem Halterungsabschnitt kann in der Einbaulage die Netztrennwand-Kassette mit ihrer Stirnseite eingehängt werden.

In der Zusammenbaulage kann der im Gurtführungsteil ausgebildete Steckkanal fluchtend in der Fahrzeugquerrichtung verlaufen und eine dem Laderaum zugewandte offene Mündung aufweisen, durch die der Netztrennwand-Halter in den Laderaum einragen kann.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine teilweise geschnittene, perspektivische Ansicht eines Kombifahrzeuges mit umgeklappten Rückenlehnenteilen und teilweise angedeuteter Netztrennwand-Kassette;
- Fig. 2: in einer vergrößerten Detailansicht die Rohbauanbindung eines Gurtretraktors sowie eines Gurtführungsteiles einer Sicherheitsgurtvorrichtung der Rücksitzanordnung bei weggelassenen Seitenverkleidungsteilen;
- Fig. 3: in einer perspektivischen Detailansicht die Anbindung des Gurtführungsteiles an einem Verstärkungsprofil des Fahrzeugrohbaus; und
- Fig. 4: in einer Ansicht entsprechend der Fig. 3 das Gurtführungsteil bei entfernten Netztrennwand-Halter.

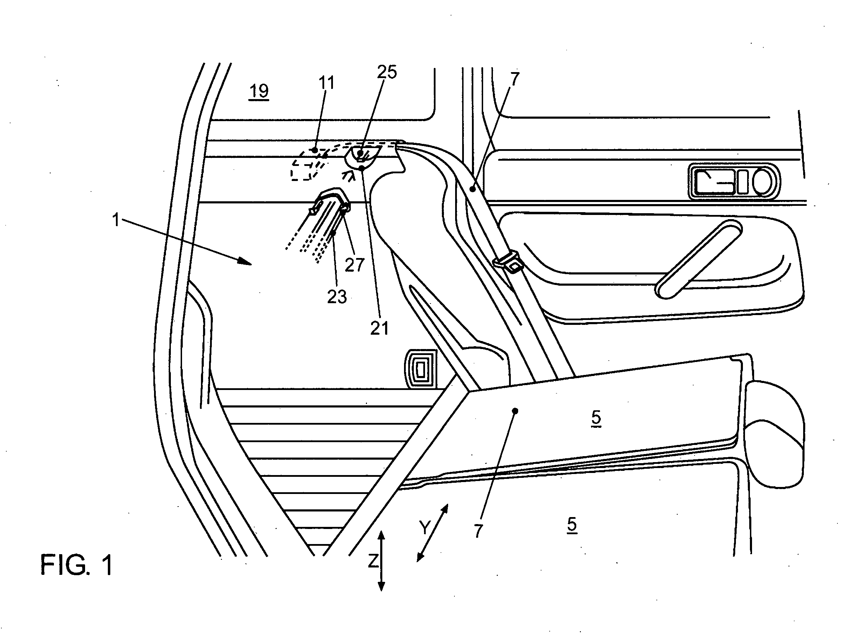

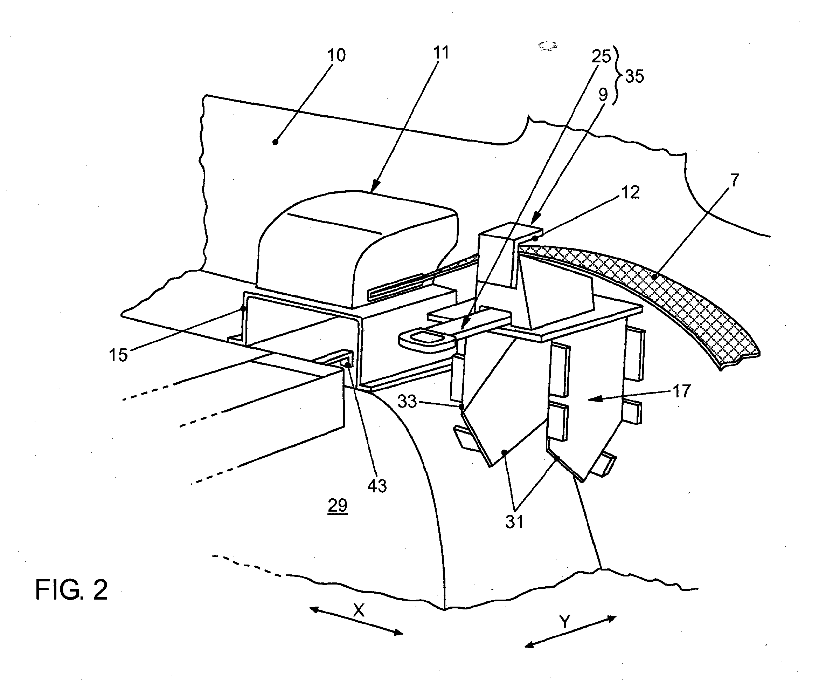

In der Fig. 1 ist ein Teil eines Kombifahrzeuges mit einem rückwärtigen Laderaum 1 sowie einer Rücksitzanordnung 3 gezeigt. Die Rückenlehnenteile 5 der Rücksitzanordnung sind in der Fig. 1 aus Gründen der Übersichtlichkeit umgeklappt, wodurch der Laderaum 1 in der Fahrzeuglängsrichtung x nach vorne entsprechend verlängert ist. In der Fig. 1 ist der nicht angelegte Sicherheitsgurt 7 des linken Rücksitzes der Rücksitzanordnung gezeigt, der über ein Gurtführungsteil 9 (Fig. 2 bis 4) bis zu einem im Bereich des Laderaums 1 angeordneten Gurtretraktor 11 geführt ist. Sowohl das Gurtführungsteil 9 als auch der Gurtretraktor 11 sind in der Fig. 1 sichtgeschützt hinter einem Seitenverkleidungsteil 13 angeordnet und über Verstärkungsprofile 15, 17 (Fig. 2) am Fahrzeugrohbau 10 angebunden, wie es in der Fig. 2 dargestellt ist.

Das Seitenverkleidungsteil 13 begrenzt gemäß der Fig. 1 in der Fahrzeugquerrichtung y den Laderaum 1 und schließt in der Fahrzeughochrichtung z unmittelbar am unteren Bereich eines heckseitigen Seitenfensters 19 ab. Am oberen Rand der Seitenverkleidung 13 ist eine Aufnahmemulde 21 eingeformt, in der eine in der Fig. 1 angedeutete Netztrennwand-Kassette 23 einlegbar ist. Die Netztrennwand-Kassette 23 kann dabei zusätzlich in einem, in die Aufnahmemulde 21 hineinragenden Netztrennwand-Halter 25 eingehängt werden.

In der Fig. 1 ist die Netztrennwand in der Netztrennwand-Kassette 23 aufgewickelt. In der Gebrauchslage kann die Netztrennwand mit ihrer Haltestange 27 ausgezogen werden und in gegenüberliegenden Aufnahmen an den nicht gezeigten Dachlängsträgern eingehängt werden, wodurch der Laderaum 1 vom Fahrgastraum getrennt ist.

In der Fig. 2 ist die Rohbauanbindung des Gurtführungsteils 9 und des Gurtretraktors 11 am Fahrzeugrohbau 10 bei weggelassener Seitenverkleidung 13 ersichtlich. Demzufolge ist der Gurtretraktor 11 über ein Verstärkungsprofil 15 oberhalb des Radkastens 29 des Fahrzeugrohrbaus 10 montiert. Das schematisch dargestellte Gurtführungsteil 9 ist über ein davon separates Verstärkungsprofil 17 (in nicht näher dargestellter Weise) am Fahrzeugrohbau 10 montiert. Das Verstärkungsprofil 17 ist dabei in etwa U-profilförmig mit zwei senkrecht nach unten abstehenden Seitenschenkeln 31 sowie einer in etwa horizontal ausgerichteten Verstärkungsplatte 33 ausgeführt.

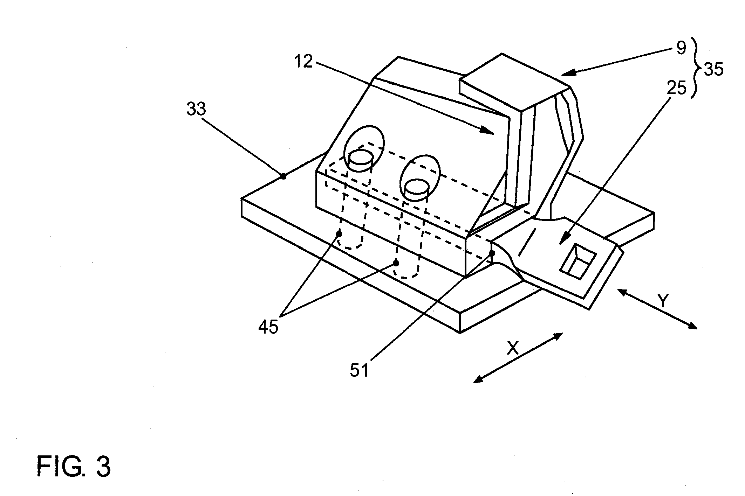

Wie aus der Fig. 2 weiter hervorgeht, ist unmittelbar im Grundkörper des Gurtführungsteils 9 der Netztrennwand-Halter 25 integriert. Das Gurtführungsteil 9 und der Netztrennwand-Halter 25 bilden daher eine gemeinsame Baueinheit 35. Diese gemeinsame Baueinheit 35 ist gemäß der Fig. 2 und auch den weiteren Figuren über eine gemeinsame Schraub-Anbindung (gemäß der Fig. 3 die Schraubbolzen 45) an der Verstärkungsplatte 33 des Verstärkungsprofils 17 festgeschraubt.

Hierzu weist der Grundkörper des Gurtführungsteils 9 an seiner, der Verstärkungsplatte 33 zugewandten Unterseite einen nach unten offenen, rillenförmigen Steckkanal 37 auf, in dem der Netztrennwand-Halter 25 eingesetzt ist. Der Netztrennwand-Halter 25 ist gemäß den Figuren ein streifenförmiges Blechformteil, dessen Basisplatte 39 in den Steckkanal 37 einschiebbar ist.

Die Basisplatte 39 trägt einen Haltebügel 41, in dem ein korrespondierender, stirnseitig an der Netztrennwand-Kassette 23 vorgesehener Haken 43 (Fig. 2) einhängbar ist.

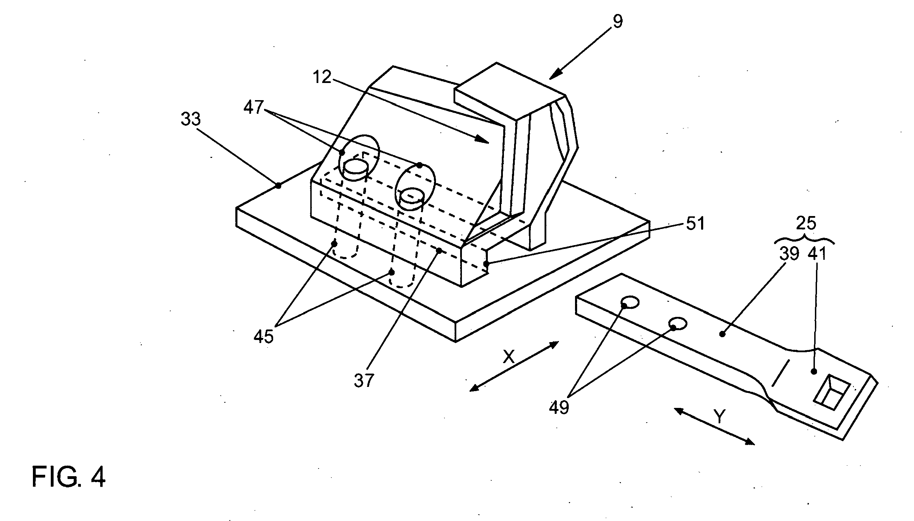

Das Querschnittsprofil der streifenförmigen Basisplatte 39 des Netztrennwand-Halters 25 sowie das Querschnittsprofil des Steckkanals 37 sind so aufeinander abgestimmt, dass in der Zusammenbaulage nur ein geringfügiges Bewegungsspiel ermöglicht ist. Zur Sicherung dieser Formschlussverbindung sind als Sicherungselemente die beiden Schraubbolzen 45 vorgesehen, die durch die zueinander fluchtend angeordneten Schraublöcher 47, 49 (Fig. 4) des Gurtführungsteils 9 und des Netztrennwand-Halters 25 geführt sind und zusätzlich mit der Verstärkungsplatte 33 des Verstärkungsprofils 17 verschraubt sind.

Im Zusammenbauzustand ist somit der im Gurtführungsteil 9 ausgebildete Steckkanal 37 fluchtend in der Fahrzeugquerrichtung y angeordnet und mit einer, in Richtung des Laderaums 1 offenen Mündung 51 ausgebildet. Durch die Mündung 51 des Steckkanals 37 kann der Netztrennwand-Halter 25 in die Aufnahmemulde 21 der Seitenverkleidung 13 einragen, wie es in der Fig. 1 gezeigt ist.

Aufgrund des bodenseitig nach unten offenen Steckkanals 37 ist in der Zusammenbaulage sowohl der Netztrennwand-Halter 25 als auch das Gurtführungsteil 9 mit Kontaktflächen unmittelbar in Anlage mit der Verstärkungsplatte 33 des Verstärkungsprofils 17. Auf diese Weise kann eine einwandfreie Krafteinleitung in den Fahrzeugrohbau 10 bei extremen Belastungen, wie sie etwa bei einem Frontalaufprall auftreten, gewährleistet werden.

In der Fig. 4 ist das Gurtführungsteil 9 bei herausgenommenem Netztrennwand-Halter 25 dargestellt. Demzufolge verbleibt gemäß der Fig. 4 der Steckkanal 37 frei. Bevorzugt kann daher das Gurtführungsteil 9 in einer Basisvariante ohne den Netztrennwand-Halter 25 montiert werden und in einer Sonderausstattung mit einem solchen Netztrennwand-Halter 25 montiert werden. Das Gurtführungsteil 9 bleibt dabei mit und ohne Einsatz des Netztrennwand-Halters 25 stets ein Gleichteil, das sowohl in der Basisvariante als auch in einer Sonderausstattung mit Netztrennwand einsetzbar ist.

## Patentansprüche

1. Fahrzeug mit einer Sicherheitsgurtvorrichtung für eine Rücksitzanordnung (3) des Fahrzeugs, mit einem Gurtführungsteil (9) zur Umlenkung des Sicherheitsgurts (7) zu einem Gurtaufroller (11), der zusammen mit dem Gurtführungsteil (9) im heckseitigen Laderaum (1) an den Fahrzeug-Rohbau (10) montiert ist, **dadurch gekennzeichnet, dass** das Gurtführungsteil (9) und ein Halter (25) für eine Netztrennwand-Kassette (23) zu einer gemeinsamen Baueinheit (35) zusammengefasst sind, die über eine gemeinsame Anbindung (45) an den Fahrzeug-Rohbau (10) montiert ist.

2. Fahrzeug nach Anspruch 1, **dadurch gekennzeichnet, dass** das Gurtführungsteil (9) unter Zwischenlage des Halters (25) auf ein Verstärkungsprofil (17) des Fahrzeug-Rohbaus (10) montiert ist.

3. Fahrzeug nach Anspruch 1 oder 2, **dadurch gekennzeichnet, dass** das Gurtführungsteil (9) einen Grundkörper mit einer Umlenköse (12), durch die der Sicherheitsgurt (7) geführt ist, und/oder einem Steckkanal (37) aufweist, in den der Halter (25) eingesetzt ist.

4. Fahrzeug nach Anspruch 1, 2 oder 3, **dadurch gekennzeichnet, dass** der Halter (25) mittels eines Sicherungselements (45) im Grundkörper des Gurtführungsteils (9) gehaltert ist.

5. Fahrzeug nach Anspruch 2, 3 oder 4, **dadurch gekennzeichnet, dass** der Steckkanal (37) auf der dem Verstärkungsprofil (17) zugewandten Seite rinnenförmig offen ist, und/oder dass der Querschnitt des Steckkanals (37) mit geringem Bewegungsspiel größer oder gleich dem Querschnittsprofil des Halters (25) bemessen ist.

6. Fahrzeug nach einem der vorhergehenden Ansprüche, **dadurch gekennzeichnet, dass** sowohl der Halter (25) als auch das Gurtführungsteil (9) mit Kontaktflächen unmittelbar in Anlage mit dem Verstärkungsprofil (17) ist.

7. Fahrzeug nach einem der vorhergehenden Ansprüche, **dadurch gekennzeichnet, dass** der Halter (25) eine im Grundkörper des Gurtführungsteils (9) eingesetzte, streifenförmige Basisplatte (39) aufweist, die mit einem Bügel (41) verlängert ist, in dem eine Stirnseite der Netztrennwand-Kassette (23) eingehängt ist.

8. Fahrzeug nach einem der Ansprüche 4 bis 7, **dadurch gekennzeichnet, dass** das Sicherungselement (45) zumindest einen Schraubbolzen aufweist, der durch zueinander fluchtend angeordnete Schraublöcher (47, 49) des Gurtführungsteils (9) und des Halters (25) geführt ist und mit dem Verstärkungsprofil (17) des Fahrzeug-Rohbaus (10) verschraubt ist.

9. Fahrzeug nach einem der vorhergehenden Ansprüche, **dadurch gekennzeichnet, dass** der im Gurtführungsteil (9) ausgebildete Steckkanal (37) eine in Fahrzeugquerrichtung (y) offene Mündung (51) aufweist, durch die der Halter (25) in den Laderaum (1) einragt.

## Claims

1. Vehicle with a seat belt device for a rear seat assembly (3) of the vehicle, with a belt-guiding part (9) for deflecting the seat belt (7) to a belt retractor (11), which is mounted together with the belt-guiding part (9) onto the vehicle body shell (10) in the rear loading compartment (1), **characterized in that** the belt-guiding part (9) and a holder (25) for a mesh partition cassette (23) are combined to form a joint constructional unit (35) which is mounted onto the vehicle body shell (10) via a joint connection (45).

2. Vehicle according to Claim 1, **characterized in that** the belt-guiding part (9) is mounted onto a reinforcing profile (17) of the vehicle body shell (10) with the interposition of the holder (25).

3. Vehicle according to Claim 1 or 2, **characterized in that** the belt-guiding part (9) has a basic body with a deflecting eye (12), through which the seat belt (7) is guided, and/or with a plug-in channel (37) into which the holder (25) is inserted.

4. Vehicle according to Claim 1, 2 or 3, **characterized in that** the holder (25) is held in the basic body of the belt-guiding part (9) by means of a securing element (45).

5. Vehicle according to Claim 2, 3 or 4, **characterized in that** the plug-in channel (37) is open in the form of a groove on the side facing the reinforcing profile (17), and/or **in that** the cross section of the plug-in channel (37) is dimensioned to be larger, with little movement clearance, than, or equal to the cross-sectional profile of the holder (25).

6. Vehicle according to one of the preceding claims, **characterized in that** both the holder (25) and the belt-guiding part (9) are directly in contract by means of contact surfaces with the reinforcing profile (17).

7. Vehicle according to one of the preceding claims, **characterized in that** the holder (25) has a strip-shaped baseplate (39) which is inserted in the basic body of the belt-guiding part (9) and is extended by a clip (41) in which an end side of the mesh partition cassette (23) is fitted.

8. Vehicle according to one of Claims 4 to 7, **characterized in that** the securing element (45) has at least one screw bolt which is guided through mutually aligned screw holes (47, 49) in the belt-guiding part (9) and in the holder (25) and is screwed to the reinforcing profile (17) of the vehicle body shell (10).

9. Vehicle according to one of the preceding claims, **characterized in that** the plug-in channel (37) formed in the belt-guiding part (9) has a mouth (51) which is open in the transverse direction (y) of the vehicle and through which the holder (25) projects into the loading compartment (1).

## Revendications

1. Véhicule avec un dispositif de ceinture de sécurité pour un agencement de siège arrière (3) du véhicule, avec une partie de guidage de ceinture (9) pour la déviation de la ceinture de sécurité (7) vers un enrouleur de ceinture (11), qui est monté avec la partie de guidage de ceinture (9) dans l'espace de chargement arrière (1) de la structure du véhicule (10), **caractérisé en ce que** la partie de guidage de ceinture (9) et un support (25) pour une cassette de filet de séparation (23) sont rassemblés en une unité de construction commune (35), qui est montée sur la structure du véhicule (10) au moyen d'une attache commune (45).

2. Véhicule selon la revendication 1, **caractérisé en ce que** la partie de guidage de ceinture (9) est montée avec interposition du support (25) sur un profilé de renforcement (17) de la structure du véhicule (10).

3. Véhicule selon la revendication 1 ou 2, caractérisé en cé que la partie de guidage de ceinture (9) présente un corps de base avec un oeillet de guidage (12), à travers lequel la ceinture de sécurité (7) est guidée, et/ou un canal d'insertion (37), dans lequel le support (25) est introduit.

4. Véhicule selon la revendication 1, 2 ou 3, **caractérisé en ce que** le support (25) est maintenu dans le corps de base de la partie de guidage de ceinture (9) au moyen d'un élément de blocage (45).

5. Véhicule selon la revendication 2, 3 ou 4, **caractérisé en ce que** le canal d'insertion (37) est ouvert en forme de rainure sur le côté tourné vers le profilé de renforcement (17), et/ou **en ce que** la section transversale du canal d'insertion (37) est de taille plus grande avec un faible jeu de mouvement ou de même taille que le profil de section transversale du support (25).

6. Véhicule selon l'une quelconque des revendications précédentes, **caractérisé en ce qu'**aussi bien le support (25) que la partie de guidage de ceinture (9) est directement appliqué(e) avec des faces de contact contre le profilé de renforcement (17).

7. Véhicule selon l'une quelconque des revendications précédentes, **caractérisé en ce que** le support (25) présente une plaque de base de forme allongée (39) introduite dans le corps de base de la partie de guidage de ceinture (9), qui est prolongée par un étrier (41) dans lequel un côté avant de la cassette de filet de séparation (23) est suspendu.

8. Véhicule selon l'une quelconque des revendications 4 à 7, **caractérisé en ce que** l'élément de blocage (45) présente au moins un boulon fileté, qui est guidé à travers des trous filetés (47, 49) disposés en alignement l'un avec l'autre de la partie de guidage de ceinture (9) et du support (25) et qui est vissé au profilé de renforcement (17) de la structure du véhicule (10).

9. Véhicule selon l'une quelconque des revendications précédentes, **caractérisé en ce que** le canal d'insertion (37) formé dans la partie de guidage de ceinture (9) présente une embouchure (51) ouverte dans la direction transversale (y) du véhicule, à travers laquelle le support (25) pénètre dans l'espace de chargement (1).
